Europäisches Patentamt

European Patent Office

Office européen des brevets

(11) Veröffentlichungsnummer: **0 240 702**

**A1**

(12) **EUROPÄISCHE PATENTANMELDUNG**

(21) Anmeldenummer: **87102875.9**

(22) Anmeldetag: **28.02.87**

(51) Int. Cl.4: **B01D 21/24**

(30) Priorität: **12.03.86 DE 3608190**

(43) Veröffentlichungstag der Anmeldung:
**14.10.87 Patentblatt 87/42**

(84) Benannte Vertragsstaaten:
**AT BE CH DE ES FR GB GR IT LI LU NL SE**

(71) Anmelder: **Kunststoff-Fertigungstechnik GmbH & Co.**
**Otto-Hahn-Str. 16**
**D-6382 Friedrichsdorf 2(DE)**

(72) Erfinder: **Wendt, Bruno, Dipl.-Ing.**
**Graf Stauffenberg Ring 15**
**D-6380 Bad Homburg v.d.H.(DE)**

(74) Vertreter: **Schubert, Siegmar, Dipl.-Ing. et al**
**Patentanwälte Dr. V. Schmied-Kowarzik Dr.**
**P. Weinhold Dr.-Ing. G. Dannenberg Dr. D.**
**Gudel Dipl.-Ing. S. Schubert Dr. P. Barz**
**Grosse Eschenheimer Strasse 39**
**D-6000 Frankfurt am Main 1(DE)**

(54) **Überlaufelement für Flüssigkeitsbehälter sowie unter Verwendung solcher Überlaufelemente hergestellte Schlammabsetzbehälter und Voreindicker.**

(57) Bei einem Überlaufelement für Flüssigkeitsbehälter, insbesondere Schlammabsetz- behälter in der Abwassertechnik ist an dem Ende (30) eines Rohres ein Verschlußstück (32; 24; 40, 42) angeordnet, welches um eine zu einer Mittel- Längsachse (36) des Rohrendes parallele Drehachse (23; 27; 39) gedreht werden kann. Das Ver- schlußstück weist an seiner Stirnseite eine zu der Drehachse versetzte Öffnung (3l; 25; 43) auf, die durch die Drehungstellung in unterschiedlicher Höhe eingestellt werden kann.

Fig. 1

EP 0 240 702 A1

## Überlaufelement für Flüssigkeitsbehälter sowie unter Verwendung solcher Überlaufelemente hergestellte Schlammabsetzbehälter und Voreindicker

Die Erfindung betrifft ein Überlaufelement für Flüssigkeitsbehälter nach dem Oberbegriff des Anspruchs I.

Solche Überlaufelemente werden insbesondere für Schlammabsetzbehälter in der Abwassertechnik eingesetzt.

Einschlägige Flüssigkeitsbehälter sind als Längsabsetzbekken, Rundabsetzbecken, Schräg-Platten-oder Lamellenklärer bekannt. Bei einem sogenannten zum Stand der Technik gehörenden Kompaktklärer sind in einem Nachklärabteil parallel zueinander schräggestellte Platten als Paket über einer Schlammabsaugung angeordnet. Zwischen den Platten wird vorgeklärtes Wasser schräg nach oben steigend geführt, wobei sich Restschlamm auf den Platten niederschlagen und nach unten gleiten kann. Das geklärte Wasser verläßt den Kompaktklärer über Zackenleisten, die oberhalb des Plattenpaketes Ablaufrinnen begrenzend angeordnet sind. Damit das geklärte Wasser über die gesamte Länge und Breite des Plattenpakets gleichmäßig entnommen wird, ist es notwendig, die Zackenleisten nach der Montage des Kompaktklärers genau auszurichten, wozu die Zackenleisten mit Langlöchern für Schraubverbindungen versehen sind. Das Ausrichten der Zackenleisten muß sehr sorgfältig erfolgen, da sich sonst nicht die gewünschten Strömungsverhältnisse in dem Nachklärabteil einstellen und die Wirksamkeit des Kompaktklärers gefährdet sein kann. Es genügt dabei nicht, die Zackenleisten einmal nach der Montage des Kompaktklärers einzujustieren, vielmehr kann sich die Stellung des gesamten Kompaktklärers beispielsweise infolge von Gebäudesetzungen zeitlich ändern und Nachjustierungen erforderlich machen. Die Justierungen und Nachjustierungen sind u.a. deswegen schwierig durchzuführen, da bei einer Verschie bung der Zackenleiste zwangsläufig zugleich sämtliche Zackenstellungen mehr oder weniger beeinflußt werden. Es ist deshalb mit diesen Zackenleisten sehr - schwierig, langzeitig eine gleichmäßige Wasserentnahme aus dem Nachklärer sicherzustellen.

Zum Stand der Technik gehören als Überlaufelemente in einer Vorrichtung zum gleichmäßigen Verteilen eines Flüssigkeitsstromes beidseitig offene Tauchrohre, die annähernd lotrecht in den Behälter hineinragen und an gleicher horizontaler Ebene enden. Die Austrittsöffnungen der Verteilerrohre liegen in verschiedenen Tiefen unter dem Flüssigkeitsspiegel im Behälter. Bei den Behältern mit an einander gegenüberliegenden Enden angeordnetem Zu-und Ablaufsystem stehen die Rohre gleicher Einbautiefe im Zu-und Ablaufsystem einander gegenüber (DE-PS I0 99 999). Damit soll das gesamte zu klärende Wasser zwangsweise im horizontalen Strom, der den Querschnitt des Beckens möglichst voll ausfüllt, zur Auslaufseite geführt werden. Jedoch ist es damit nicht ohne weiteres möglich, die Verteilung des Flüssigkeitsauslaufs über der gesamten Länge der Verteilerrinne einfach und leicht kontrollierbar einzustellen.

Der vorliegenden Erfindung liegt die Aufgabe zugrunde, Überlaufelemente unter Verwendung je eines Rohrendes zu schaffen, bei deren Einsatz Flüssigkeit gleichmäßig aus einem Flüssigkeitsbehälter, insbesondere aus dem Bereich des Flüssigkeitsniveaus abgeleitet werden kann. Der Ablauf der Flüssigkeit an den einzelnen Stellen soll sich unkompliziert kontrollieren und einstellen lassen. Da eine Vielzahl von Überlaufelementen an einem Flüssigkeitsbehälter einzusetzen sind, sollen sich die Überlaufelemente durch eine wenig aufwendige Bauweise auszeichnen.

Diese Aufgabe wird durch die Ausbildung des Überlaufelements mit den in dem kennzeichnenden Teil des Anspruchs I angegebenen Merkmalen gelöst.

Der Ablauf aus jedem dieser Überlaufelemente kann einfach durch Verdrehen des Verschlußstücks eingestellt werden, womit die Höhe der Öffnung zu der Mittel-Längsachse des Rohrstücks variiert werden kann. Wenn die Öffnung in eine tiefe Stellung gedreht ist, strömt aus ihr ein großer Durchfluß heraus, während nach einem Hochdrehen der Öffnung der Durchfluß entsprechend verringert werden kann. Der Durchfluß läßt sich durch den frei heraustretenden Flüssigkeitsstrahl augenfällig kontrollieren, insbesondere im Vergleich zu benachbart angeordneten Überlaufelementen.

Ein zusätzlicher Vorteil besteht bei der Verwendung dieser Überlaufelemente in der zuverlässigen, einfachen Abdichtung des Rohrendes in einer Flüssigkeitsbehälterwand, in der es eingesetzt wird.

Die Abdichtung kann besonders vorteilhaft dann durchgeführt werden,- wenn das Verschlußstück in einer Alternative der Erfindung gegenüber dem Rohrende drehbar angeordnet ist. In diesem Fall kann das Rohrende fest in die Flüssigkeitsbehälterwand eingesetzt werden und vollkommen abgedichtet werden, da keine Relativbewegung zwischen dem Rohrende und der Flüssigkeitsbehälterwand erfolgen muß.

In einer Ausführungsform der Erfindung wird als Verschlußstück eine handelsübliche Endkappe verwendet, so daß eine Sonderanfertigung des Verschlußstücks weitgehend entfällt. Die Endkappe, die normalerweise mit einem abzuschließenden Rohrende fest verbunden wird, beispielsweise verklebt oder verschweißt wird, ist hier jedoch an dem Rohrende drehbar gelagert. Vor dem Aufsetzen der Endkappe auf das Rohrende wird die Endkappe mit einer Bohrung versehen, die gegenüber dem Mittelpunkt gleich der Drehachse der Endkappe exzentrisch versetzt ist. - Ein weiterer Vorteil der Endkappe besteht darin,. daß sie sehr kompakt ist, insbesondere einen gegenüber dem Rohrende nur wenig größeren Außendurchmesser aufweist. - Die in der vorliegenden Anmeldung sogenannte Endkappe kann auch als Muffe bezeichnet werden.

Besonders große Niveauunterschiede der Flüssigkeit relativ zu einer Flüssigkeitsbehälterwand, in der die Überlaufelemente im wesentlichen horizontal längs einer Linie angeordnet sind, können durch die Ausbildung des Überlaufelements nach Anspruch 3 ausgeglichen werden. Bei diesem Überlaufelement ist der Hub zwischen der tiefsten Stellung der Öffnung in der Stirnseite des zylindrischen Verschlußstücks und der höchsten Stellung der Öffnung, in die sich die Öffnung drehen läßt, groß, da nicht durch den Durchmesser des Rohrendes begrenzt. Damit dieser Hub zur Einstellung des Abflusses wirksam ist, ist die Drehachse des zylindrischen Verschlußstücks gegenüber der Mittel-Längsachse des Rohrendes versetzt. Dies bedingt eine entsprechende Anbringung des Kopfstücks an dem Rohrende.

Damit der Flüssigkeitsdruck in dem Rohrende nicht das zylindrische Verschlußstück von dem zylindrischen Kopfstück axial abdrückt, ist gemäß Anspruch 8 ein O-Ring zwischen diesen Teilen angeordnet. Der O-Ring kann in einer umlaufenden Nut außen an dem Kopfstück oder aber innen an dem Verschlußstück liegen.

Entsprechend kann ein O-Ring zu dem gleichen Zweck zwischen der üblichen Endkappe bzw. Muffe und dem Rohrende angeordnet sein, auf dem die Endkappe gelagert ist.

Die Ausführungsform des Überlaufelements nach Anspruch 2 setzt voraus, daß das Niveau der Flüssigkeit in dem Behälter nicht die Höhe der Endkappe übersteigt, da sonst der Betrag des Abflusses kaum noch durch Verdrehen der Endkappe variiert werden kann.

Bei der Ausführungsform des Überlaufelements nach Anspruch 3 kann das Flüssigkeitsniveau über dem Rohrende liegen, höchstens jedoch so hoch wie der Innenraum des Kopfstückes ist, über dessen Höhe die Öffnung in dem Verschlußstück verdreht werden kann.

Besonders hohe Niveauunterschiede können aber mit der Ausbildung des Überlaufelements nach Anspruch 4 kontrolliert werden. Bei diesem Überlaufelement kann die Wandbohrung in dem L-förmig quer verlaufenden Rohrelement von einer tiefsten Stellung bis in eine Stellung gedreht werden, in der das L-förmige Rohrelement lotrecht steht. Der Herstellaufwand für dieses Überlaufelement ist relativ niedrig, wenn der sehr hohe mögliche Niveauausgleich berücksichtigt wird.

Je nach dem verwendeten Material für dieses Überlaufelement mit dem annähernd L-förmig quer verlaufenden Rohrelement, vorzugsweise einem Kunststoff, kann das Rohrelement entweder durch Abschrägung und Verschweißen mit dem Rohrende verbunden sein oder aber von dem Rohrende einstückig abgebogen sein.

Besonders vorteilhaft ist das Überlaufelement nicht nur mit einem kurzen Rohrende ausgestattet, welches im wesentlichen zur Anbringung des Überlaufelements an der Flüssigkeitsbehälterwand und zur drehbaren Lagerung dient, sondern als Rohr ausgebildet, welches sich im wesentlichen bis zu der gegenüber liegenden Flüssigkeitsbehälterwand oder Wandstelle und gegebenenfalls darüber hinaus erstreckt. In diesem Fall kann das Überlaufelement die Strömung in dem Flüssigkeitsbehälter, insbesondere einem Schlammabsetzbehälter, besonders vorteilhaft beeinflussen. Wenn der Schlammabsetzbehälter mit paketartig angeordneten Lamellen oder Platten ausgebildet ist, können die Abschnitte der Lamellen oder Platten durch die Rohre auf äquidistanten Abständen gehalten werden. Wenn die nach Anspruch 9 in dem Rohr angeordnete Lochreihe bzw. der mindestens eine nach Anspruch 10 angebrachte Längsschlitz zwischen benachbarten Platten oder Lamellen liegt, kann die Strömung zwischen diesen Lamellen bzw. Platten praktisch individuell durch Einstellen der Endkappe bzw. des Verschlußstücks auf dem Kopfstück eingestellt werden.

Die durch den Einsatz der erfindungsgemäßen Überlaufelemente im Schlammabsetzbehälter nach Anspruch 12 erzielbaren Vorteile wurden teilweise bereits oben genannt. Wesentlich ist, daß durch diese Überlaufelemente in Verbindung mit den Rohren, die eine Lochreihe bzw. mindestens einen Längsschlitz an ihrer unteren Mantellinie parallel zu der Hauptlängsachse aufweisen, nicht nur eine gleichmäßige Entnahme des Wassers ohne Schlammteilchen über der Oberfläche erfolgt, an der die Rohre angeordnet sind, sondern daß darüber hinaus optimale Strömungsverhältnisse in dem Schlammabsetzbehälter eingestellt werden können. Wenn in dem Schlammabsetzbehälter ein konzentrierter Zufluß des zu klärenden Abwassers erfolgt, muß für die optimale Nutzung des Raumes durch das hochströmende Wasser, daß an keiner Stelle eine unerwünscht hohe Strömungsgeschwindigkeit herrscht, welche die Sedimentation hindern würde, das Wasser über der Fläche, die durch die Oberseiten der Lamellen gebildet wird, gleichmäßig abgenommen werden. Dies geschieht durch die unteren Bohrungen bzw. die Längsschlitzein den Rohren. Durch den gleichmäßigen Abfluß des Wassers aus den Rohren durch die Überlaufelemente wird das Wasser gezwungen, gleichmäßig in die Rohre durch die Bohrungen bzw. die Längsschlitze einzuströmen, wodurch in dem Klärabteil die gewünschten Strömungsverhältnisse herbeigeführt werden. - In einer Ausführungsform des Schlammabsetzbehälters, bei der die Strömung in einer Ebene auseinandergezogen wird, verhindern die Rohre mit den Überlaufelementen bei gleichmäßiger Einstellung, daß eine Querkomponente der Strömung zwischen den Lamellen auftritt, wodurch die Steiggeschwindigkeit des Wassers erhöht wird und die Abscheidung verschlechtert wird. Ebenso wird unter den Lamellen eine Vorströmung quer zu diesen vermieden, welche den Sedimentationseffekt ebenfalls verschlechtern kann.

Bei der Anwendung der erfindungsgemäßen Überlaufelemente an einem Voreindicker mit einem Rundbecken genügt die Anbringung der Rohrenden längs des Umfangs der Beckenwand mit äquidistanten Abständen nach Anspruch 14.

Wenn die Überlaufelemente nach Anspruch 15 in Verbindung mit zugehörigen Rohren, die wiederum eine untere Lochreihe oder mindestens einen Längsschlitz aufweisen, eingesetzt werden, sind die Rohre zu dem Zentrum des Rundbeckens radial anzuordnen.

. Anhand einer Zeichnung mit neun Figuren werden im folgenden die verschiedenen Aspekte und Ausführungsformen der Erfindung beschrieben. Es zeigen:

Fig. 1 ein durch eine Endkappe gebildetes Überlaufelement auf einem Rohr in einem Längsschnitt,

Fig. 2 eine Vorderansicht auf die Endkappe,

Fig. 3 ein annähernd L-förmiges Überlaufelement als Bestandteil eines Rohres in einem Längsschnitt,

Fig. 4 eine Vorderansicht auf das Überlaufelement nach Fig. 3,

Fig. 5 ein zylindrisches Verschlußstück an einem gegenüber einem Rohrende vergrößerten Kopfstück,

Fig. 6 eine Vorderansicht auf das Überlaufelement nach Fig. 5,

Fig. 7 einen Schlammabsetzbehälter mit einer Reihe von Überlaufelementen, welche drehbare Endkappen aufweisen, teilweise aufgebrochen,

Fig. 8 einen Schlammabsetzbehälter nach Fig. 7 in einer Draufsicht und

Fig. 9 einen Voreindicker mit radial angeordneten Überlaufelementen, welche eine drehbare Endkappe aufweisen, ebenfalls in einer Draufsicht.

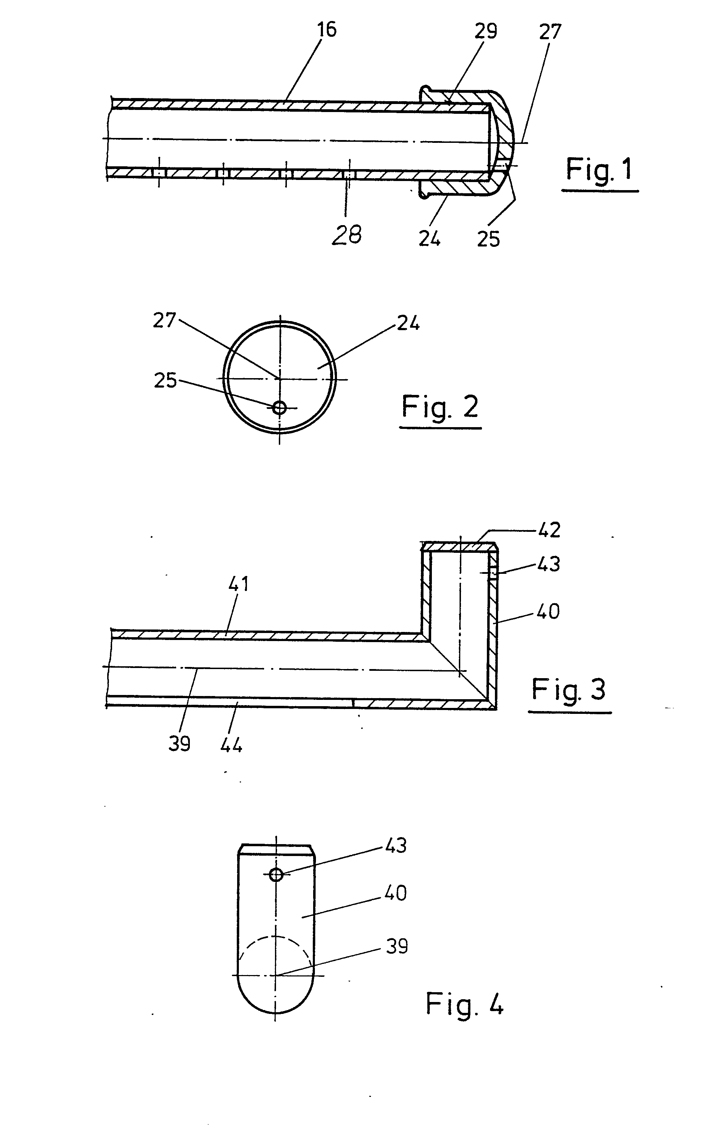

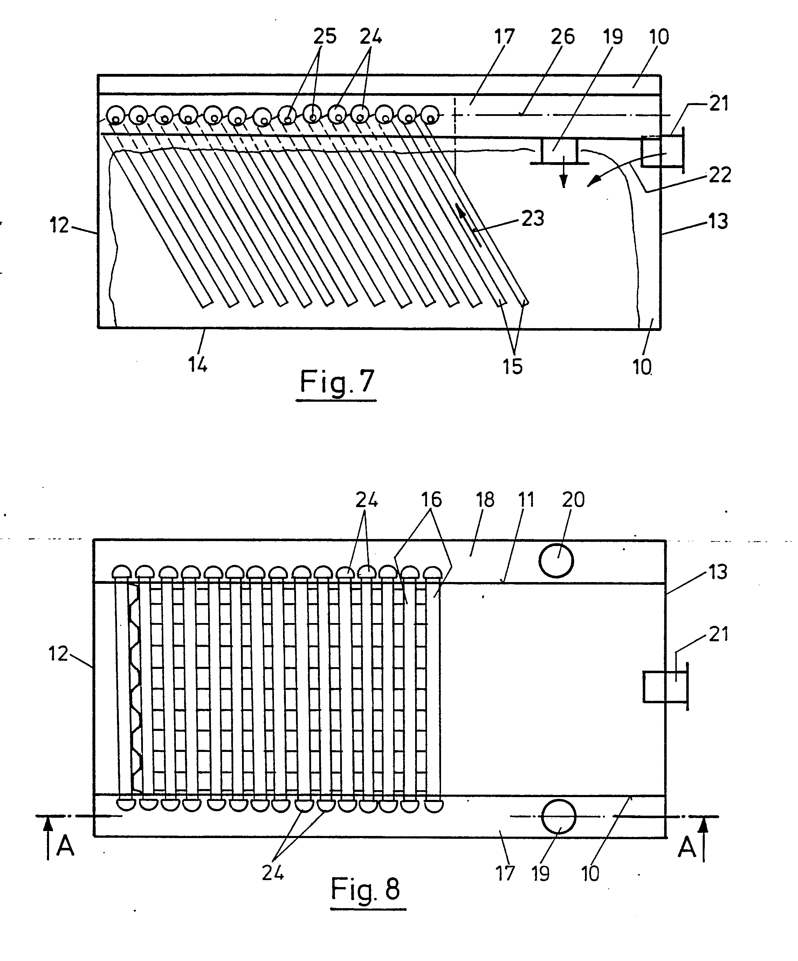

Es wird im folgenden zunächst anhand der Figuren 7 und 8 ein bevorzugter Einsatz der Überlaufelemente in einem Schlammabsetzbehälter beschrieben. Daran schließen sich Einzelheiten der verschiedenen Ausführungsformen der Überlaufelemente nach den Figuren 1 bis 6 an. Schließlich wird eine weitere vorteilhafte Verwendungsmöglichkeit der Überlaufelemente nach Fig. 9 besprochen.

In den Figuren 7 und 8 ist ein Schlammabsetzbehälter stark vereinfacht mit Seitenwänden 10, 11 und Querwänden 12, 13 sowie einem Boden 14 dargestellt. In dem Behälterinnern sind Lamellen 15 - schräg und im Abstand zueinander parallel verlaufend paketartig angeordnet. Der gegenseitige Abstand der Lamellen wird an ihrem oberen Ende durch eine entsprechende Anzahl parallel angeordneter Rohre 16 gehalten, die mit ihren Rohrenden beidseitig die Seitenwände 10, 11 durchstoßen und in diesen abgedichtet sind. Die Rohrenden ragen außerhalb der Seitenwände 10, 11 in kastenförmige Ablaufrinnen 17, 18.

In Fig. 7 ist der Kasten entlang der Schnittlinie A-A in Fig. 8 längsgeschnitten dargestellt. Darunter ist ein Teil der Seitenwand 10 ausgebrochen, um die Lage der Lamellen in dem Behälterinnern zu verdeutlichen. Jede der Ablaufrinnen 17, 18 ist durch einen Ablaufstutzen 19, 20 nach unten geöffnet. In eine Stirnseite des Schlammabsetzbehälters ragt ein Einlaufstutzen 21.

Der Schlammabsetzbehälter arbeitet im wesentlichen so, daß diesem gegebenenfalls vorbehandeltes, insbesondere neutralisiertes Abwasser durch den Einlaufstutzen 21 zugeführt wird, was mit dem Pfeil 22 angedeutet ist. In dem dem Einlaufstutzen benachbarten Raumabschnitt des Schlammabsetzbehälters kann eine Vorklärung erfolgen, wozu ein nicht dargestellter Einlaufkasten beitragen kann. Danach strömt das vorgeklärte Abwasser über der gesamten Breite des Behälters unten zwischen die Lamellen 15 hinein und steigt zwischen diesen, beispielsweise in Richtung des Pfeils 23, hoch. Durch möglichst gleichmäßige Verteilung des Durchsatzes durch sämtliche Stellen über die Länge und Breite des Lamellenpakets soll sich praktisch überall zwischen Lamellen eine so niedrige Strömungsgeschwindigkeit einstellen, daß der restliche Schlamm sedimentiert und längs der Lamellen nach unten rutscht. Von dort kann der Schlamm aus dem Kasten beispielsweise durch nicht dargestellte Absaugeinrichtungen entfernt werden.

Die gleichmäßige Verteilung des Durchflusses zwischen den Lamellen und in der dargestellten Ausführungsform, in der die Lamellen über dem Boden enden, und das Vermeiden von Querkomponenten der Vorströmung wird maßgeblich durch eine gleichmäßige Ableitung des geklärten Wassers an den oberen Lamellenenden über die gesamte Fläche des Lamellenpakets (in Draufsicht betrachtet) bestimmt. Diese gleichmäßige Wasserentnahme ist maßgeblich für die Wirksamkeit des Schlammabsetzbehälters, da eine ungleichmäßige Entnahme durch bevorzugte Strömungswege eine erhöhte Strömungsgeschwindigkeit und damit eine schlechtere Sedimentation verursacht. Die Wirksamkeit des Schlammbehälters herabsetzend sind auch sogenannte tote Bereiche, in denen das zu klärende Abwasser gänzlich steht, da dies bedeutet, daß das Abwasser durch andere Bereiche des Schlammabsetzbehälters um so schneller fließt.

Die gleichmäßige Wasserentnahme an der Oberfläche des Wasserniveaus im Bereich des Lamellenpakets wird durch die in besonderer Weise ausgebildeten Rohre l6 sowie an deren Rohrenden beidseitig drehbar gelagerten Endkappen 24 erreicht. Die Endkappen befinden sich somit in bzw. über den Ablaufrinnen, und zwar so, daß das geklärte Wasser in freiem Strahl aus Öffnungen 25 herausströmen kann, welche in den Endkappen exzentrisch angeordnet sind.

Das Flüssigkeitsniveau in dem Schlammabsetzbehälter ist mit der strichpunktierten Linie 26 angedeutet, es liegt niedriger als die höchste Stellung, in welche die Öffnungen 25 der Endkappen 24 gedreht werden können.

Zur weiteren Erläuterung der Endkappen, die somit als Überlaufelemente des Schlammabsetzbehälters dienen, sowie der Rohre, auf denen die Endkappen drehbar gelagert sind, wird im folgenden auf die Figuren l und 2 Bezug genommen:

Aus Fig. l ist ersichtlich, daß das Rohr l6 entlang seiner unteren Mantellinie, die gerade und parallel zu einer strichpunktierten Hauptlängsachse 27 verläuft, eine Reihe von Löchern 28 aufweist, die vorzugsweise im äquidistanten Abstand zueinander angeordnet sind. An dem rechten Rohrende ist die Endkappe 24 so gelagert, daß sie manuell um die Hauptlängsachse 27 verdreht werden kann, sich aber in dieser Drehlage nicht selbsttätig verstellt. Zwischen dem Außenumfang des Rohres l6 und dem Innenumfang der Endkappe 24 ist ein O-Ring 29 angeordnet, welcher trotz der Drehbarkeit für einen dichten Abschluß des Rohrinnern sorgt und außerdem verhindert, daß die Endkappe unter dem Flüssigkeitsdruck nach außen axial abgeschoben wird. - Wesentlich ist die als Bohrung ausgebildete Öffnung 25 in der Stirnseite der Endkappe, die exzentrisch zu der mit der Hauptlängsachse 27 zusammenfallenden Drehachse der Endkappe angeordnet ist.

Durch den Einsatz dieser Rohre mit den drehbaren mit versetzter Bohrung versehenen Endkappen in dem Schlammabsetzbehälter nach den Fig. 7 und 8 wird erreicht, daß das geklärte, zwischen je zwei Lamellen hochsteigende Wasser von demjenigen Rohr aufgenommen wird, welches sich zwischen den oberen Enden dieser Lamellen befindet und diese auf Abstand hält. Das Wasser strömt dabei in die unteren Löcher 28 mit jeweils gleichmäßigen Teilmengen über die Länge des Rohres ein. Daher ist eine gleichmäßige Wasserentnahme über die Länge der Rohre bzw. in Richtung der Querwände des Schlammabsetzbehälters erreicht. - Da die Rohre in Richtung der Seitenwände äquidistant angeordnet sind und da je nach der Drehstellung der Endkappe an jedem Rohrende die austretenden Flüssigkeitsstrahlen augenfällig gleichmäßig eingestellt werden können, wird auch eine gleichmäßige Flüssigkeitsentnahme in der zweiten Oberflächenrichtung des Schlammabsetzbehälters erzielt. Diese gleichmäßige Flüssigkeitsentnahme an allen Endkappen setzt keine vollständig plane Aufstellung des Schlammabsetzbehälters voraus und kann auch dann einre guliert werden, wenn sich der Behälter im Laufe der Zeit unterschiedlich setzen sollte.

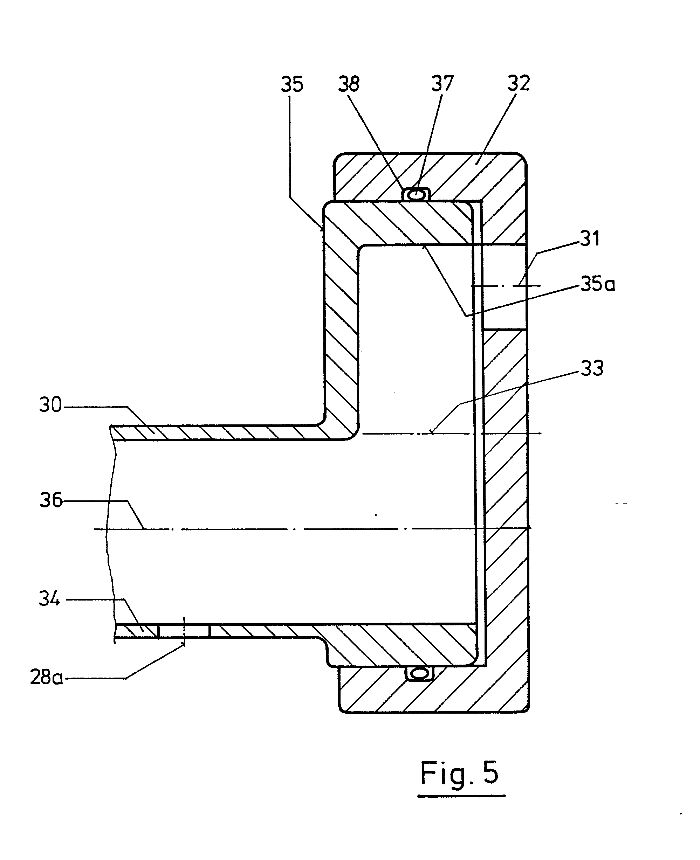

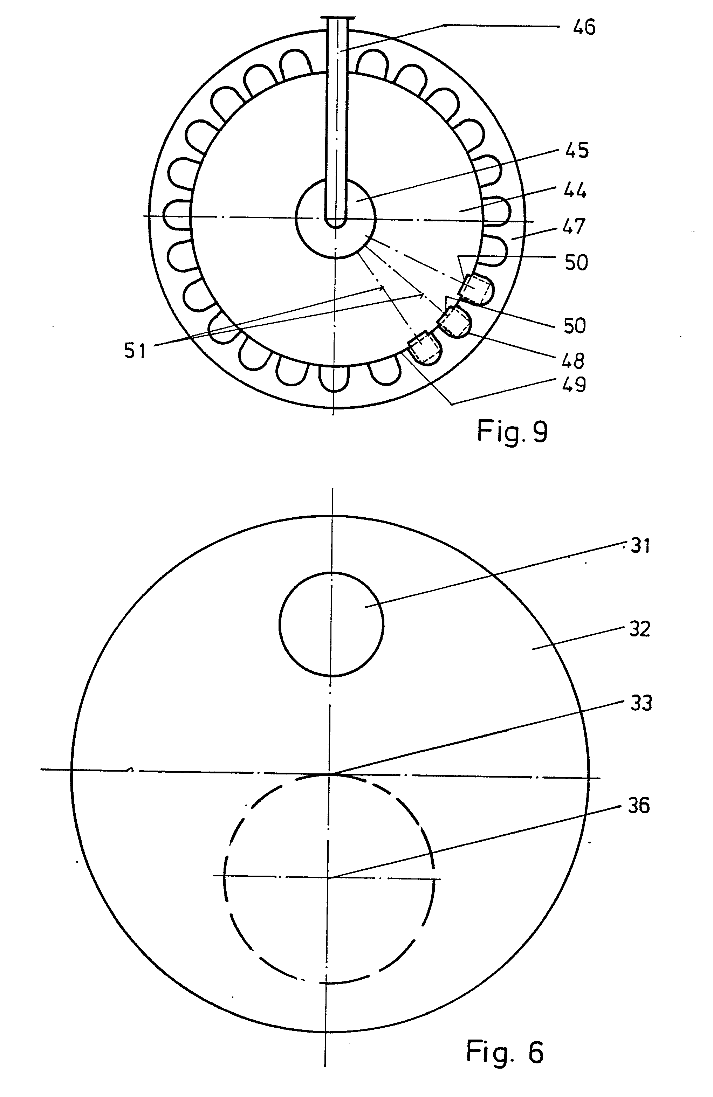

In den Figuren 5 und 6 ist eine andere Ausführungsform des Überlaufelements an einem Rohrende dargestellt. Sie zeichnet sich dadurch aus, daß eine Öffnung 3l an einer Stirnseite eines zylindrischen Verschlußstücks 32 einen besonders großen Hub zwischen der untersten und der obersten möglichen Stellung hat. Dies wird dadurch erreicht, daß das zylindrische Verschlußstück auf einem zylindrischen Kopfstück 35 drehbar gelagert ist, welches einen gegenüber dem Innendurchmesser des Rohrendes größeren Innendurchmesser aufweist. Weiterhin sind das Kopfstück und das auf ihm drehbare Verschlußstück bezüglich des Rohrendes so angeordnet, daß die Öffnung 3l in der untersten Stellung an die innere untere Mantellinie 34 angrenzt und in seiner höchsten Stellung an eine innere obere Mantellinie 35a des Kopfstücks angrenzt. Die Drehachse 33, die gleichzeitig die Hauptlängsachse des Kopfstücks ist, befindet sich also hier außerhalb der Hauptlängsachse 36 des Rohrendes.

Zur Abdichtung zwischen dem Kopfstück und dem zylindrischen | Verschlußstück dient wiederum ein O-Ring 37, der hier in einer umlaufenden Nut 38 in dem Verschlußstück liegt. Der O-Ring verhindert zusätzlich, daß das Verschlußstück 32 unter dem Flüssigkeitsdruck von dem Kopfstück abgeschoben wird.

Bei der Ausführungsform nach den Figuren 3 und 4, welche ebenso wie die Ausführungsform nach den Figuren I und 2 verkleinert dargestellt ist, wird das Verschlußstück durch ein abgeschlossenes Rohrelement gebildet, welches annähernd L-förmig zu dem Rohrende verläuft und mit dessen Inneren in fester Verbindung steht. Hier ist also das Verschlußstück nicht gegenüber dem Rohrende, sondern nur mit diesem zusammen um eine Hauptlängsachse 39 des Rohrendes drehbar. In der Ausführungsform nach den Figuren 3 und 4 ist das Rohrelement 40 schräg geschnitten an ein Rohr 4I angesetzt. Das Rohrelement ist oben durch eine Scheibe 42 flüssigkeitsdicht verschlossen und weist an seiner Vorderseite eine Wandbohrung 43 in großem Abstand zu der Hauptlängsachse 39 auf. - Anstatt der Reihe Löcher 28 längs der unteren Mantellinie des Rohres I6 in Fig. I ist das Rohrende 4I mit einem Längsschlitz 44 an entsprechender Stelle versehen.-Im Unterschied zu den Ausführungsformen nach den Figuren I und 2 bzw. 5 und 6 ist das Rohr bzw. Rohrende 4I in der Ausführungsform nach den Figuren 3 und 4 drehbar zu lagern, damit die Wandbohrung 43 eine unterschiedliche Höhe einnehmen kann. Der Hub dieser Wandbohrung ist ebenfalls groß. Ebenso wie die Ausführungsform nach den Figuren 5 und 6 kann diejenige nach den Figuren 3 und 4 so eingesetzt werden, daß das Flüssigkeitsniveau in dem Behälter über dem Rohr liegt.

Es ist sowohl denkbar, die Rohre beidseitig mit Verschlußstücken zu versehen, wie sie in Fig. 7 dargestellt sind, oder aber nur ein Rohrende gemäß den Figuren I, 3 und 5 mit Verschlußstücken auszustatten.

Die vorteilhafte Anwendung der letztgenannten Variante ist in Figur 9 für einen Voreindicker mit einem Rundbecken 44 gezeigt. Der Voreindicker weist einen in einen zentralen Teil 45 hineinragenden Einlaufstutzen 46 auf, sowie eine radial umlaufende Ablaufrinne 47, die wiederum im Querschnitt kastenförmig bzw. U-förmig sein kann. Verschlußstücke 48 sind hier in gleichmäßigem Umfangsabstand an einer Beckenwand 49 angeordnet, so daß die Verschlußstücke über einem Boden der Ablaufrinne in diese hineinragen. Die Verschlußstücke sind im einzelnen wie in Figur I dargestellt ausgebildet.

Es ist möglich, die Verschlußstücke an kurzen Rohrenden, die in Fig. 9 mit 50 bezeichnet sind, an der Beckenwand anzubringen. Die Rohrenden können aber auch zu geschlitzten oder gelochten Rohren - siehe Fig. I und 3 - gehören, die radial zu dem zentralen Teil 45 des Voreindickers angeordnet sind. Diese Rohre sind mit den strichpunktierten Linien 5I angedeutet. Bei der letztgenannten Ausführungsform ergibt sich nicht nur eine gleichmäßige Flüssigkeitsentnahme in Umfangsrichtung der Beckenwand, wenn die Verschlußstücke mit ihren Öffnungen richtig eingestellt - verdreht - sind, sondern auch weitgehend in radialer Richtung.

## Ansprüche

I. Überlaufelement für Flüssigkeitsbehälter, insbesondere Schlammabsetzbehälter in der Abwassertechnik, unter Verwendung eines Rohrendes, **dadurch gekennzeichnet,** daß an dem Rohrende (z.B. 30) ein Verschlußstück (32; 24; 40, 42) angeordnet ist, welches um eine zu einer Mittel-Längsachse (36) des Rohrendes parallele Drehachse (23; 27; 39) drehbar ist und an seiner Stirnseite eine zu der Drechachse versetzte Öffnung (3I; 25; 43) aufweist.

2. Überlaufelement nach Anspruch I, **dadurch gekennzeichnet,** daß das Verschlußstück aus einer Endkappe (24) besteht, die an dem Rohrende (Rohr I6) drehbar gelagert ist und eine zu der Drehachse (gleich Haupt-Längsachse 27) versetzte Bohrung (25) aufweist.

3. Überlaufelement nach Anspruch I, **dadurch gekennzeichnet ,** daß das Rohrende in ein zylindrisches Kopfstück (35) dergestalt übergeht, daß eine Haupt-Längsachse (33) des Kopfstücks gegenüber der Haupt-Längsachse (36) des Rohrendes (30) versetzt ist, daß das Kopfstück einen gegenüber dem Innendurchmesser des Rohrendes größeren Innendurchmesser aufweist und daß auf dem Kopfstück ein zylindrisches Verschlußstück (32) drehbar gelagert ist, dessen Stirnseite eine gegenüber ihrer Mittel-Längsachse (33) versetzte Öffnung (3I) aufweist.

4. Überlaufelement nach Anspruch I, **dadurch gekennzeichnet,** daß das Rohrende in ein zu dessen Haupt-Längsachse annähernd L-förmig quer verlaufendes, im wesentlichen abgeschlossenes Rohrelement (40) mit einer Wandbohrung (43) übergeht, die gegenüber der Haupt-Längsachse (39) des Rohrendes (4I) versetzt ist, und daß das Rohrende zusammen mit dem Rohrelement um die Haupt-Längsachse (39) des Rohrelements drehbar gelagert ist.

5. Überlaufelement nach Anspruch 4, **dadurch gekennzeichnet,** daß das im wesentlichen abgeschlossene Rohrelement (40) annähernd L-förmig mit dem Rohrende (4I) verschweißt ist.

6. Überlaufelement nach Anspruch 4, **dadurch gekennzeichnet,** daß das im wesentlichen abgeschlossene Rohrelement von dem Rohrende abgebogen ist.

7. Überlaufelement nach Anspruch 2,
**dadurch gekennzeichnet,**
daß zwischen dem Rohrende und der Endkappe (24) ein O-Ring (29) angeordnet ist.

8. Überlaufelement nach Anspruch 3,
**dadurch gekennzeichnet,**
einen O-Ring (37) zwischen dem Kopfstück (35) und dem zylindrischen Verschlußstück (32).

9. Überlaufelement nach einem der vorangehenden Ansprüche,
**dadurch gekennzeichnet,**
daß das Rohrende Bestandteil eines Rohrs (l6) ist, welches eine Lochreihe (28) längs einer zu der Hauptlängsachse (27) parallelen Mantellinie aufweist.

l0. Überlaufelement nach einem der Ansprüche l bis 8,
**dadurch gekennzeichnet,**
daß das Rohrende (4l) Bestandteil eines Rohrs ist, welches längs einer zu der Haupt-Längsachse (39) parallelen Mantellinie geschlitzt ist (Schlitz 44).

ll. Überlaufelement nach einem der vorangehenden Ansprüche,
**dadurch gekennzeichnet,**
daß es aus Kunststoff besteht.

l2. Schlammabsetzbehälter mit in ihm parallel zueinander verlaufenden Lamellen sowie mit Überlaufelementen, die zwischen wenigstens einer Ablaufrinne und dem Behälterinneren an einer Seitenwand vorgesehen sind, unter Verwendung von Überlaufelementen nach den Ansprüchen l - ll,
**dadurch gekennzeichnet,**
daß die Rohre (l6) der Überlaufelemente jeweils zwischen zwei Lamellen (l5) an deren oberen Enden im wesentlichen horizontal angeordnet sind und deren gegenseitigen Abstand bestimmen und daß die drehbaren Verschlußstücke (Endkappen 24) an den durch die Wand reichenden Rohrenden über die Ablaufrinne (l7 bzw. l8) ragen.

l3. Schlammabsetzbehälter nach Anspruch l2,
**dadurch gekennzeichnet ,**
daß die Rohre (l6) mit ihren Rohrenden und Verschlußstücken (24) äquidistant zueinander angeordnet sind.

l4. Voreindicker mit einem Rundbecken, längs dessen Rand eine Ablaufrinne verläuft, wobei an einer Beckenwand zwischen dem Beckeninneren und der Beckenwand Überlaufelemente vorgesehen sind, unter Verwendung von Überlaufelementen nach den Ansprüchen l bis 8 und ll,
**dadurch gekennzeichnet,**
daß die Rohrenden (50) in der Beckenwand (49) dergestalt im wesentlichen horizontal und äquidistant angebracht sind, daß die Verschlußstücke über die Ablaufrinne (47) ragen.

l5. Voreindicker nach Anspruch l4, unter Verwendung von Überlaufelementen, bei denen das Rohrende Bestandteil Schlitz längs einer zu der Hauptlängsachse parallelen, Mantellinie aufweist,
**dadurch gekennzeichnet,**
daß die Rohre (5l) im wesentlichen horizontal radial zu dem Zentrum (zentraler Teil 45) des Rundbeckens angeordnet sind.

Fig. 1

Fig. 2

Fig. 3

Fig. 4

Fig. 5

46

45

44

47

50

50

48

49

51

Fig. 9

31

32

33

36

Fig. 6

0 240 702

Fig. 7

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | DE-C-2 843 677 (H. STEINMETZER) * Spalte 4, Zeilen 55-68; Spalte 5, Zeilen 1-14 * | 1,2 | B 01 D 21/24 |
| A | | 3-8,14 | |
| | --- | | |
| X | EP-A-0 128 122 (W. NILL METALLBAU) * Seite 7, Zeilen 6-18 * | 1,3 | |
| | --- | | |
| A | US-A-2 782 929 (W.W. COLKET) * Spalte 3, Zeilen 17-23 * | 4,5,6, 14 | |
| | --- | | |
| A | US-A-3 447 688 (B.S. McCABE) * Spalte 2, Zeilen 11-14 * | 9 | |
| | | | RECHERCHIERTE SACHGEBIETE (Int. Cl.4) |
| | --- | | |
| A | US-A-1 981 310 (F.S. CURRIE) * Seite 1, Zeilen 69-72 * | 10 | B 01 D C 02 F |
| | --- | | |
| A | FR-A-1 255 545 (ZAVODY NA VYROBU VZDU CHOTECHNICKYCH ZARIZENI NARODNI PODNIK) * Seite 2 * | 12,13 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 06-07-1987 | DE PAEPE P.F.J. |